# EUROPÄISCHE PATENTSCHRIFT

(11) **EP 3 154 176 B1**
(45) Veröffentlichungstag und Bekanntmachung des Hinweises auf die Patenterteilung: **08.12.2021**
(21) Anmeldenummer: 16193023.5
(22) Anmeldetag: 10.10.2016
(51) Int. Cl.: H02K 29/03, H02K 1/14, H02K 1/27

(54) **ELEKTRISCHER ANTRIEBSMOTOR**
ELECTRICAL DRIVE MOTOR
MOTEUR D'ENTRAÎNEMENT ÉLECTRIQUE

(30) Priorität: 08.10.2015 DE 102015219488
(43) Veröffentlichungstag der Anmeldung: 12.04.2017
(73) Patentinhaber: BSH Hausgeräte GmbH, 81739 München (DE)
(72) Erfinder: Blaz, Robert, 06601 Humenne (SK); Lessmeier, Rainer, 84036 Landshut (DE)

(56) Entgegenhaltungen:
- EP-A1- 2 234 250
- EP-A2- 2 463 988
- US-A1- 2014 084 732
- US-A1- 2014 125 189
- None

## Beschreibung

Die Erfindung betrifft einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetrotor, der eine Motorwelle und ein auf der Motorwelle sitzendes erstes Blechpaket aufweist, das eine der Anzahl von Polen des Permanentmagnetrotor entsprechende Anzahl von Taschen aufweist, in denen jeweils ein Permanentmagnet eingesetzt ist, und welches Blechpaket im axialen Querschnitt eine von der Kreisform abweichende Umfangskontur aufweist, die in jedem, jeweils einem Permanentmagnet zugeordneten Sektor des Blechpakets eine Bogenform mit einer größeren Krümmung aufweist, als eine das Blechpaket im Querschnitt einhüllende Kreisumfangskontur. Die Erfindung betrifft außerdem ein Haushaltsgerät mit einem solchen elektrischen Antriebsmotor.

Die WO 03/081748 A1 beschreibt einen mehrphasigen Innenläufermotor mit einem genuteten Stator, einen vom Stator durch einen Luftspalt getrennten Rotor, welcher ein Blechpaket mit einer Mehrzahl von ausgeprägten Polen aufweist, die zwischen sich Pollücken definieren, wobei im Blechpaket des Rotors Taschen ausgebildet sind, welche jeweils zwischen zwei ihnen benachbarten Pollücken des Rotors verlaufen. In diesen Taschen sind Permanentmagnete angeordnet, welche im Wesentlichen radial magnetisiert sind und von denen jeder zwei pollückenseitige Enden aufweist, die den ihm benachbarten Pollücken des Rotors zugewandt sind.

Die EP 2 234 250 A1 beschreibt einen elektrischen Motor mit einer Mehrzahl von Permanentmagneten, die nahe des äußeren Umfangs des Eisenkerns des Rotors angeordnet sind. Demgemäß sind die Permanentmagnete an einer äußeren Mantelwand der Eisenkerne angebracht. Die Permanentmagnete umgeben den Eisenkern umfangsmäßig und sind von einem separaten äußeren Ringkörper eingefasst. Der separate Ringkörper dient dabei dazu, die an dem äußeren Umfang des Eisenkerns nur anliegenden Permanentmagnete in ihren Positionen zu halten.

Die Aufgabe der Erfindung ist es, einen elektrischen Antriebsmotor, insbesondere einen permanenterregten Synchronläufermotor zu schaffen, dessen Rastmomente reduziert sind.

Die Aufgabe der Erfindung wird gelöst durch einen elektrischen Antriebsmotor nach Anspruch 1.

Der elektrische Antriebsmotor kann insbesondere einen feststehenden Außenstator und einen drehbar gelagerten Innenrotor aufweisen. Der Permanentmagnetrotor kann mehrere Polpaare, insbesondere zwei, vier, sechs, acht oder mehr Polpaare aufweisen. Insoweit weist der Permanentmagnetrotor eine entsprechende doppelte Anzahl von Polen auf. Jedem Pol des Permanentmagnetrotors ist eine Tasche zugeordnet. In jeweils einer Tasche kann ein einzelner Permanentmagnet eingesetzt sein. Üblicherweise sind alle Permanentmagnete des Permanentmagnetrotors identisch ausgebildet. Jeder Permanentmagnet weist eine quaderförmige Gestalt auf.

Dabei können die beiden gegenüberliegenden größten Begrenzungsflächen des Permanentmagnets die beiden Pole des Magneten bilden. Die Permanentmagnete sind über den Umfang des Permanentmagnetrotors gleichmäßig verteilt angeordnet und zwar derart, dass die größten Begrenzungsflächen der Permanentmagnete in Umfangsrichtung abwechselnd mit ihren Nordpol-Seiten und ihren Südpol-Seite am Rotor nach außen weisend angeordnet sind.

Der erfindungsgemäße elektrische Antriebsmotor weist wenigstens zwei Blechpakete auf. In der einfachsten Ausführungsform verfügt der Permanentmagnetrotor also über das erste Blechpakte und das zweite Blechpaket. Im Falle einer anderen Ausführungsform von beispielsweise drei Blechpaketen verfügt der Permanentmagnetrotor also über ein erstes Blechpakte und dein zweites Blechpaket und ein drittes Blechpakte, wobei das zweite Blechpakte und das dritte Blechpaket insoweit zwei erfindungsgemäß zweite Blechpakete bilden. Der erfindungsgemäße elektrische Antriebsmotor kann weitere Blechpakete aufweisen, wobei immer das weitere Blechpakte um den Versatzwinkel gegenüber dem benachbarten Blechpakte versetzt auf der Motorwelle des Permanentmagnetrotors angeordnet ist.

Jede Tasche kann eine der Gestalt der Permanentmagnete entsprechende Form aufweisen, wobei die Tasche geringfügig größer ausgebildet ist, so dass jeweils ein einzelner Permanentmagnet in eine Tasche eingefügt werden kann. Jeder Permanentmagnet kann durch ein Befestigungsmittel in der Tasche fixiert sein. Beispielsweise kann der Permanentmagnet mittels Klebstoff in der Tasche befestigt sein. Ein solcher Klebstoff kann beispielsweise ein thermisch aushärtendes Harz sein. Die quaderförmigen Permanentmagnete können sich in den Taschen mit ihren größten Begrenzungsflächen tangential zu einem Umfangskreis des Permanentmagnetrotors erstrecken. Dies bedeutet, dass die quaderförmigen Permanentmagnete sich auch mit ihren größten Begrenzungsflächen parallel zur Drehachse des Permanentmagnetrotors bzw. parallel zur Drehachse der Motorwelle erstrecken. Jeder Permanentmagnet liegt insoweit in einem Sektor des Blechpakets des Permanentmagnetrotors bzw. definiert durch seine tangentiale Erstreckung in der Tasche seinen jeweiligen Sektor des Blechpakets.

Jedes Blechpaket wird von mehreren identischen, insbesondere gestanzten Blechzuschnitten gebildet, welche deckungsgleich übereinander gestapelt und zu einem kompakten Paket miteinander verbunden sind. Jedes Blechpaket kann insoweit durch Stanzpacketierung hergestellt sein. Die deckungsgleich übereinander gestapelten Bleche können beispielsweise durch Schweißen, Nieten, Klammern oder eben Stanz- bzw. Klebepacketierung verbunden sein.

Alle Blechzuschnitte bzw. jedes Blechpaket weist eine im axialen Querschnitt des Blechpakets eine von der Kreisform abweichende Umfangskontur auf. Bei dieser Umfangskontur weist das Blechpaket in jedem, jeweils einem Permanentmagnet zugeordneten Sektor eine Bogenform mit einer größeren Krümmung auf, als eine das Blechpaket im Querschnitt einhüllende Kreisumfangskontur. Dies bedeutet, dass das Blechpaket im axialen Querschnitt eine Umfangskontur aufweist, die wellenartig um den Umfang umläuft, wobei abwechselnd Berge und Täler auf der Mantelfläche gebildet werden und jeweils die Berge die Pole der Permanentmagnete überdecken und die Täler in den sogenannten Rotornuten liegen, welche Zwischenräume zwischen jeweils zwei benachbarten Polen des Permanentmagnetrotors bilden. Jedes Blechpaket weist insoweit eine der Anzahl der Pole entsprechende Anzahl von Bergen auf.

Indem der elektrische Antriebsmotor erfindungsgemäß wenigstens ein dem ersten Blechpaket entsprechend ausgebildetes zweites Blechpaket aufweist, das auf der Motorwelle des Permanentmagnetrotors bezüglich des ersten Blechpakets um einen um die Drehachse des Permanentmagnetrotors gedrehten Versatzwinkel versetzt angeordnet ist, können die Rastmomente des elektrischen Antriebsmotors reduziert werden. Durch eine Reduktion der Rastmomente kann ein ruhigerer Lauf des Antriebsmotors erzielt werden, und insbesondere auch die Geräuschentwicklung des Antriebsmotors verringert werden.

Alle bezüglich eines beispielhaften Blechpakets beschriebenen Merkmale gelten insoweit sowohl das erste Blechpaket, das zweite Blechpaket, als auch für jedes evtl. weitere Blechpaket. Das wenigstens eine zweite Blechpaket weist somit identische Merkmale auf, wie das erste Blechpaket, wobei lediglich die Winkelanordnung auf der Motorwelle eine andere ist und zwar versetzt um den genannten Versatzwinkel. Das erste Blechpaket und das zweite Blechpaket, bzw. jedes weitere Blechpaket sind axial aufeinanderfolgend auf der Motorwelle befestigt. Die Blechpakete können axial stirnseitig unmittelbar aneinander anliegend auf der Rotorwelle befestigt sein. Alternativ kann zwischen jeweils zwei axial benachbarten Blechpaketen ein geringfügiger Spalt vorhanden sein. Generell ist jedes Blechpaket, d.h. sowohl das erste Blechpaket und das wenigstens eine zweite Blechpaket in allen Ausführungsvarianten als ein gerader bzw. senkrechter Zylinder ausgebildet, d.h. die konkaven und konvexen Bögen erstrecken sich in axialer Richtung parallel zur Drehachse des Permanentmagnetrotors. Die konkaven und konvexen Bögen erstrecken also nicht schräg zur Drehachse des Permanentmagnetrotors.

Der Versatzwinkel kann eine Größe aufweisen, die multipliziert mit dem kleinsten gemeinsamen Vielfachen der Anzahl von Polen des Permanentmagnetrotors und der Anzahl von Polschuhen des Stators, zumindest annähernd oder genau 180 Winkelgrad ergibt.

Indem der Versatzwinkel eine Größe aufweist, die multipliziert mit dem kleinsten gemeinsamen Vielfachen der Anzahl von Polen des Permanentmagnetrotors und der Anzahl von Polschuhen des Stators, zumindest annähernd oder genau 180 Winkelgrad ergibt, kann eine besonders gute Verringerung der Rastmomente erreicht werden. Wenn sich der Permanentmagnetrotor im Statorfeld dreht, dann variiert üblicherweise der magnetische Widerstand, wenn sich der Luftspalt zwischen Stator und Rotor aufgrund der abwechselnd von den Rotorpolen überstrichenen Statorpole und Statornuten ändert. Insoweit ändert sich der magnetische Widerstand innerhalb eines vollständigen Umlaufs des Permanentmagnetrotors in Abhängigkeit der Anzahl von Polen des Permanentmagnetrotors und der Anzahl von Polschuhen des Stators. Indem der Versatzwinkel eine Größe aufweist, die multipliziert mit dem kleinsten gemeinsamen Vielfachen der Anzahl von Polen des Permanentmagnetrotors und der Anzahl von Polschuhen des Stators, zumindest annähernd oder genau 180 Winkelgrad ergibt, können insoweit die Amplituden der Schwingungen des magnetischen Widerstands bzw. der Rastmomente verringert werden.

Der Stator kann in einer speziellen Ausführungsvariante neun Polschuhe aufweisen, der Permanentmagnetrotor sechs Pole aufweisen und der Versatzwinkel zumindest annähernd oder genau 10 Winkelgrad betragen. Dieser optimale Versatzwinkel kann in der Praxis geringfügig vom rechnerisch idealen Versatzwinkel von genau 10 Winkelgrad abweichen, um die besten Ergebnisse einer Verringerung der Rastmomente zu erhalten. Dies kann bauartbedingt sein und bspw. durch die jeweilige geometrische Gestalt von Stator und Permanentmagnetrotor begründet sein. In alternativen Ausführungsvarianten kann der Stator bspw. zwölf Polschuhe aufweisen, der Permanentmagnetrotor acht Pole aufweisen, und der Versatzwinkel mit einem kleinsten gemeinsamen Vielfachen von 24 folglich zumindest annähernd oder genau 7,5 Winkelgrad betragen. In einer weiteren alternativen Ausführungsvarianten kann der Stator bspw. sechs Polschuhe aufweisen, der Permanentmagnetrotor vier Pole aufweisen und der Versatzwinkel mit einem kleinsten gemeinsamen Vielfachen von 12 folglich zumindest annähernd oder genau 15 Winkelgrad betragen.

Das zweite Blechpaket kann unter Bildung eines radialen Trennspaltes zwischen dem ersten Blechpaket und dem zweiten Blechpaket in axialer Richtung vom ersten Blechpaket beabstandet auf der Motorwelle befestigt sein.

Ein radialer Trennspalt bedeutet, dass das zweite Blechpaket mit seiner dem ersten Blechpaket zugewandten axialen Stirnseite nicht bündig bzw. berührend an der axialen Stirnseite des ersten Blechpakets anliegt, die dem zweiten Blechpaket zugewandt ist, sondern dass zwischen der axialen Stirnseite des zweiten Blechpakets und der axialen Stirnseite des ersten Blechpakets ein Zwischenraum verbleibt, so dass die beiden Blechpakete durch einen Luftspalt voneinander getrennt auf der Motorwelle angeordnet sind. Ein solcher Luftspalt kann eine gewisse magnetische Isolierung darstellen, welche die magnetischen Felder des zweiten Blechpaktes gegen die magnetischen Felder des ersten Blechpaktes zumindest in einem gewissen Umfang abschirmen kann. Ein solcher Trennspalt kann eine axiale Breite von bspw. 0,1 Millimeter bis 1,0 Millimeter aufweisen.

Alternativ kann das zweite Blechpaket in axialer Richtung jedoch auch in unmittelbarem Kontakt zum ersten Blechpaket auf der Motorwelle befestigt sein.

Die Permanentmagnete weisen erfindungsgemäß eine zumindest im Wesentlichen quaderförmige Gestalt auf und die Taschen erstrecken sich im ersten Blechpaket und im zweiten Blechpaket parallel zur Drehachse des Permanentmagnetrotors, derart, dass die in die Taschen eingesetzten Permanentmagnete gleichmäßig um die Motorwelle herum verteilt angeordnet sind.

Die Permanentmagnete können beispielsweise eine großflächige, im Wesentlichen rechteckige obere Begrenzungsfläche aufweisen, welche den einen magnetischen Pol aufweist und die in der Einbaulage des Permanentmagneten radial nach außen gerichtet angeordnet ist, und eine gleichgroße, im Wesentlichen rechteckige untere Begrenzungsfläche aufweisen, welche den anderen magnetischen Pol aufweist und die in der Einbaulage des Permanentmagneten radial nach innen gerichtet angeordnet ist. Die übrigen vier Seitenflächen des quaderförmigen Permanentmagneten können eine deutlich geringere Höhe aufweisen, als die Breite und die Länge der rechteckigen oberen und unteren Begrenzungsflächen ist. Alle Kanten des quaderförmigen Permanentmagnets können mit einer Fase versehen sein bzw. abgerundet ausgebildet sein.

Solche quaderförmigen Permanentmagnete können sich dann in den Taschen mit ihren größten Begrenzungsflächen tangential zu einem Umfangskreis des Permanentmagnetrotors erstrecken. Dies bedeutet, dass die quaderförmigen Permanentmagnete sich mit ihren größten Begrenzungsflächen, d.h. der oberen Begrenzungsfläche, welche den einen magnetischen Pol aufweist und der unteren Begrenzungsfläche, welche den anderen magnetischen Pol aufweist, parallel zur Drehachse des Permanentmagnetrotors bzw. parallel zur Drehachse der Motorwelle erstrecken. Jeder Permanentmagnet liegt insoweit in einem Sektor des Blechpakets des Permanentmagnetrotors bzw. definiert durch seine tangentiale Erstreckung in der Tasche seinen jeweiligen Sektor des Blechpakets.

Jeweils benachbarte Paare von Permanentmagneten des ersten Blechpaktes und des zweiten Blechpakets können am Umfang des Permanentmagnetrotors die gleiche magnetische Polarität aufweisen.

Dies bedeutet, dass in einer solchen Ausführungsform die Permanentmagnete bzw. die magnetischen Pole der Permanentmagnete des ersten Blechpaktes im Wesentlichen gleich ausgerichtet bzw. angeordnet sind, wie die Permanentmagnete bzw. die magnetischen Pole der Permanentmagnete des zweiten Blechpaktes und sie sich in ihrer gegenseitigen Lage nur durch den Versatzwinkel unterscheiden. Insoweit liegen die magnetischen Nordpole des ersten Blechpaktes im Wesentlichen in einer Flucht mit den magnetischen Nordpolen des zweiten Blechpaktes. Die magnetischen Nordpole des ersten Blechpaktes liegen insoweit benachbart zu den magnetischen Nordpolen des zweiten Blechpaktes, lediglich um den Versatzwinkel versetzt. Gleiches gilt auch für die magnetischen Südpole der beiden Blechpakete. Insoweit liegen die magnetischen Südpole des ersten Blechpaktes im Wesentlichen in einer Flucht mit den magnetischen Südpolen des zweiten Blechpaktes. Die magnetischen Südpole des ersten Blechpaktes liegen insoweit benachbart zu den magnetischen Südpolen des zweiten Blechpaktes, lediglich um den Versatzwinkel versetzt.

Der Stator kann zwischen den Polschuhen ausgebildete Statornuten aufweisen, die sich parallel zur Drehachse des Permanentmagnetrotors erstrecken. Es handelt sich insoweit um gerade Statornuten und nicht um schräge Statornuten. Indem der Stator zwischen den Polschuhen ausgebildete Statornuten aufweist, die sich parallel zur Drehachse des Permanentmagnetrotors erstrecken, kann der Stator auf einfache Weise und kostengünstig hergestellt werden.

In diesem Sinne kann der Stator demgemäß zwischen den Statornuten ausgebildete Polschuhe aufweisen, die sich parallel zur Drehachse des Permanentmagnetrotors erstrecken. Es handelt sich insoweit um gerade Polschuhe und nicht um schräg verlaufende Polschuhe. Indem der Stator zwischen den Statornuten ausgebildete Polschuhe aufweist, die sich parallel zur Drehachse des Permanentmagnetrotors erstrecken, kann der Stator auf einfache Weise und kostengünstig hergestellt werden.

Das erste Blechpaket und das zweite Blechpaket weisen jeweils zwischen den Polen ausgebildete Rotornuten auf, die sich parallel zur Drehachse des Permanentmagnetrotors erstrecken. Es handelt sich insoweit um gerade Rotornuten und nicht um schräge Rotornuten. Indem der Permanentmagnetrotor zwischen den Polen ausgebildete Rotornuten aufweist, die sich parallel zur Drehachse des Permanentmagnetrotors erstrecken, kann der Permanentmagnetrotor auf einfache Weise und kostengünstig hergestellt werden.

In diesem Sinne kann der Permanentmagnetrotor demgemäß zwischen den Rotornuten ausgebildete Pole aufweisen, die sich parallel zur Drehachse des Permanentmagnetrotors erstrecken. Es handelt sich insoweit um gerade Pole und nicht um schräg verlaufende Pole. Indem der Permanentmagnetrotor zwischen den Rotornuten ausgebildete Pole aufweist, die sich parallel zur Drehachse des Permanentmagnetrotors erstrecken, kann der Permanentmagnetrotor auf einfache Weise und kostengünstig hergestellt werden.

Die Rotornuten können von konkaven Mantelwandabschnitten des ersten Blechpakets bzw. des zweiten Blechpakets gebildet werden. Die konkaven Mantelwandabschnitte des Permanentmagnetrotors sind insoweit Einbuchtungen in der Mantelwand des jeweiligen Blechpakets. In diesem Sinne werden die Rotorpole von konvexen Mantelwandabschnitten des ersten Blechpakets bzw. des zweiten Blechpakets gebildet. Die konvexen Mantelwandabschnitte des Permanentmagnetrotors sind insoweit Erhebungen in der Mantelwand des jeweiligen Blechpakets.

Die Aufgabe wird außerdem gelöst durch ein Haushaltsgerät, insbesondere Geschirrspülmaschine, Waschmaschine, Trockner oder Dunstabzugshaube, aufweisend einen elektrischen Antriebsmotor, wie erfindungsgemäß beschrieben.

Konkrete Ausführungsbeispiele von erfindungsgemäßen elektrischen Antriebsmotoren sind in der nachfolgenden Beschreibung unter Bezugnahme auf die beigefügten Figuren näher erläutert. Bestimmte einzelne Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: einen Querschnitt durch eine Anordnung von Stator und Permanentmagnetrotor eines beispielhaften elektrischen Antriebsmotors;
- Fig. 2: eine perspektivische Darstellung eines erfindungsgemäßen Permanentmagnetrotors mit einem ersten Blechpaket und mit einem, um einen Versatzwinkel versetzt dazu auf der Motorwelle angeordneten, zweiten Blechpaket;
- Fig. 3: eine axiale Draufsicht auf das erste Blechpaket mit dahinter um den Versatzwinkel versetzt auf der Motorwelle angeordnetem zweitem Blechpaket des Permanentmagnetrotors gemäß Fig. 1;
- Fig. 4: eine Seitenansicht einer ersten Ausführungsvariante des Permanentmagnetrotors gemäß Fig. 3, bei der das zweite Blechpaket unter Bildung eines Spaltes axial beabstandet zum ersten Blechpaket auf der Motorwelle befestigt ist; und
- Fig. 5: eine Seitenansicht einer zweiten Ausführungsvariante des Permanentmagnetrotors gemäß Fig. 3, bei der das zweite Blechpaket axial unmittelbar anschließend an das erste Blechpaket auf der Motorwelle befestigt ist.

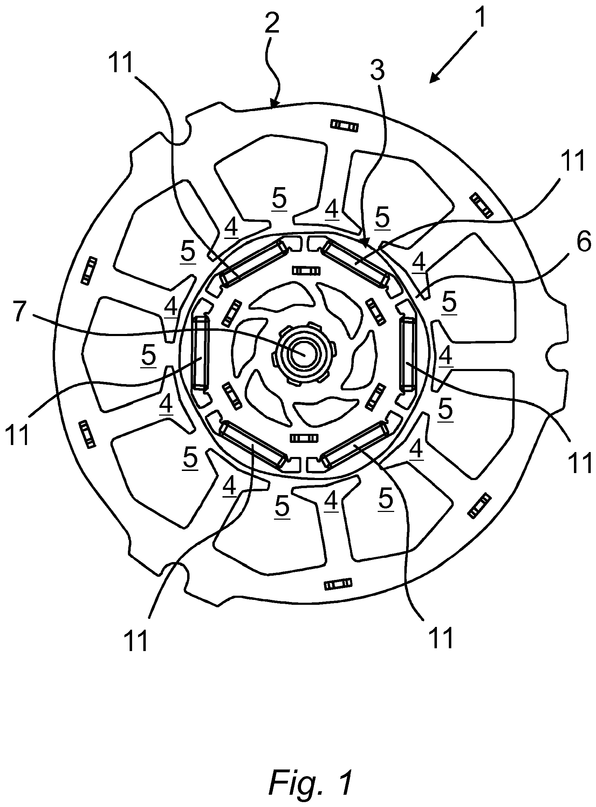

Die Fig. 1 zeigt eine Anordnung von Stator 2 und Permanentmagnetrotor 3 eines beispielhaften elektrischen Antriebsmotors 1.

Der Stator 2 weist mehrere Polschuhe 4 und Statornuten 5 auf, die über den Umfang abwechselnd angeordnet sind. Im Falle des dargestellten Ausführungsbeispiels weist der Stator 2 insgesamt neun Polschuhe 4 und neun Statornuten 5 auf. Um die Polschuhe 4 ist eine nicht näher dargestellte elektrisch ansteuerbare Statorwicklung angebracht. Im Feld der Statorwicklung ist unter Belassen eines Ringspaltes 6 der Permanentmagnetrotor 3 drehantreibbar gelagert. Der Permanentmagnetrotor 3 weist eine Motorwelle 7 und ein auf der Motorwelle 7 sitzendes erstes Blechpaket 8.1 auf. Das erste Blechpaket 8.1 weist eine der Anzahl von Polen 9 des Permanentmagnetrotors 3 entsprechende Anzahl von Taschen 10 auf. Im Falle des dargestellten Ausführungsbeispiels weist der Permanentmagnetrotor 3 insgesamt sechs Pole 9 und damit sechs Taschen 10 auf. In den Taschen 10 ist jeweils ein Permanentmagnet 11 eingesetzt.

Das erste Blechpaket 8.1 weist im axialen Querschnitt eine von der Kreisform abweichende Umfangskontur auf, die in jedem, jeweils einem Permanentmagnet 11 zugeordneten Sektor des ersten Blechpakets 8.1, eine Bogenform mit einer größeren Krümmung aufweist, als eine das erste Blechpaket 8.1 im Querschnitt einhüllende Kreisumfangskontur.

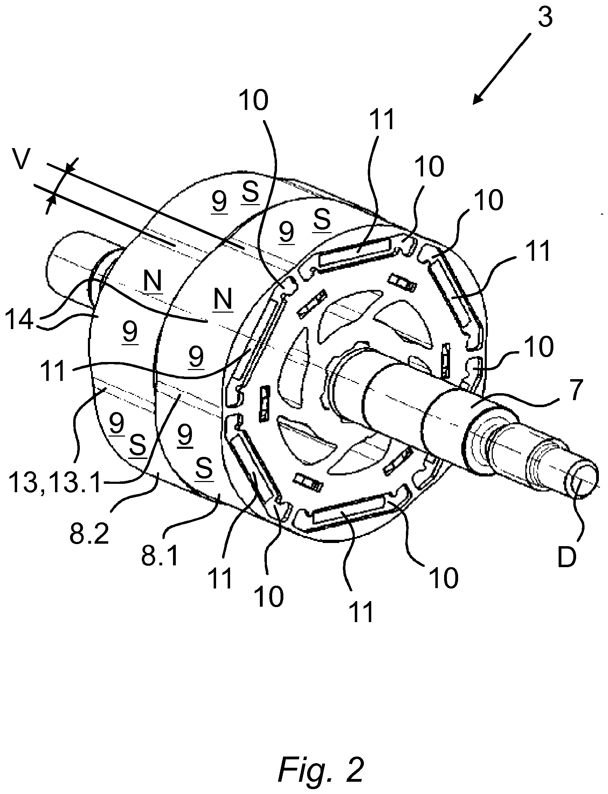

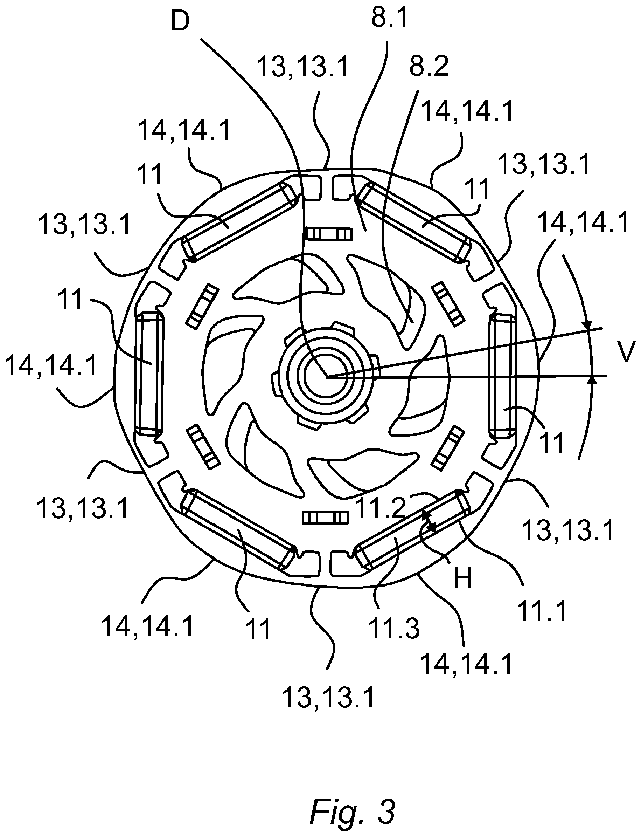

Im Falle des dargestellten Ausführungsbeispiels weist der Permanentmagnetrotor 3 ein einziges, dem ersten Blechpaket 8.1 entsprechend ausgebildetes, zweites Blechpaket 8.2 auf. Dieses zweite Blechpaket 8.2 ist, wie in Fig. 2 und Fig. 3 dargestellt, auf der Motorwelle 7 des Permanentmagnetrotors 3 bezüglich des ersten Blechpakets 8.1 um einen um die Drehachse D des Permanentmagnetrotors 3 gedrehten Versatzwinkel V versetzt angeordnet.

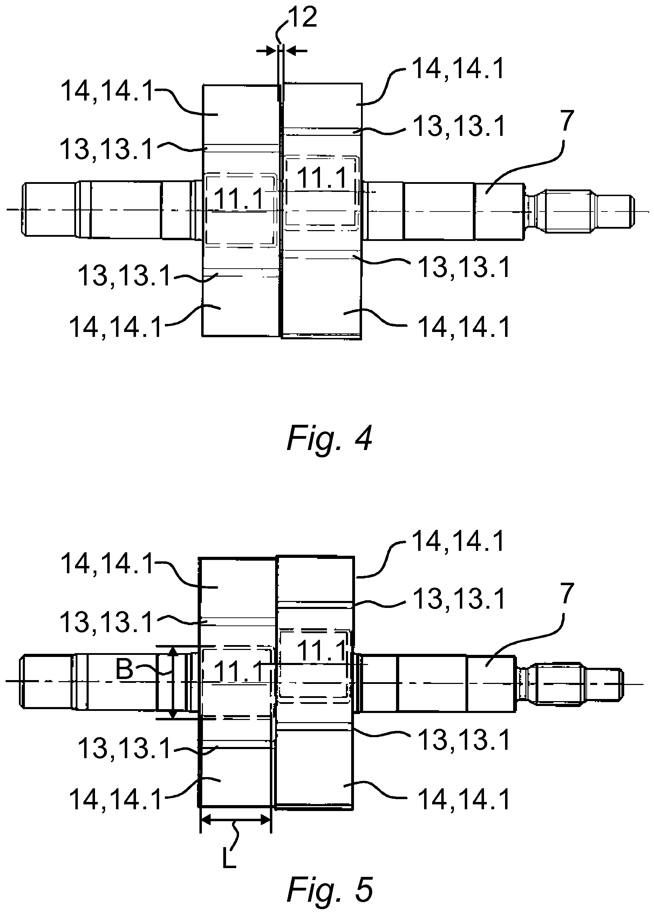

Alle bezüglich des ersten Blechpakets 8.1 beschriebenen Merkmale gelten insoweit auch für das zweite Blechpaket 8.2, als auch für jedes evtl. weitere Blechpaket von nicht dargestellten Ausführungsvarianten. Das wenigstens eine zweite Blechpaket 8.2 weist somit identische Merkmale auf, wie das erste Blechpaket 8.1, wobei lediglich die Winkelanordnung auf der Motorwelle 7 eine andere ist und zwar versetzt um den genannten Versatzwinkel V. Das erste Blechpaket 8.1 und das zweite Blechpaket 8.2 sind axial aufeinanderfolgend auf der Motorwelle 7 befestigt. Die Blechpakete 8.1, 8.2 können axial stirnseitig unmittelbar aneinander anliegend auf der Rotorwelle befestigt sein, wie dies in Fig. 5 dargestellt ist. Alternativ kann zwischen dem ersten Blechpaket 8.1 und dem zweiten Blechpaket 8.2 ein geringfügiger Trennspalt 12 vorhanden sein, wie dies in Fig. 4 dargestellt ist. Generell ist sowohl das erste Blechpaket 8.1 als auch das zweite Blechpaket 8.2 als ein gerader bzw. senkrechter Zylinder ausgebildet, d.h. konkave Mantelwandabschnitte 13 und konvexe Mantelwandabschnitte 14 erstrecken sich in axialer Richtung parallel zur Drehachse D des Permanentmagnetrotors 3. Die konkaven Mantelwandabschnitte 13 und die konvexen Mantelwandabschnitte 14 erstrecken sich demgemäß nicht schräg zur Drehachse D des Permanentmagnetrotors 3, sondern gerade.

Das erste Blechpaket 8.1 und das zweite Blechpaket 8.2 weisen insoweit jeweils zwischen den von den konvexen Mantelwandabschnitten 14 gebildeten Polen 14.1 ausgebildete Rotornuten 13.1 auf, die sich parallel zur Drehachse D des Permanentmagnetrotors erstrecken. Die Rotornuten 13.1 werden insoweit von den konkaven Mantelwandabschnitten 13 gebildet. Es handelt sich insoweit um gerade Rotornuten 13.1 und nicht um schräge Rotornuten. Indem der Permanentmagnetrotor 3 zwischen den Polen 14.1 ausgebildete Rotornuten 13.1 aufweist, die sich parallel zur Drehachse D des Permanentmagnetrotors 3 erstrecken, kann der Permanentmagnetrotor 3 auf einfache Weise und kostengünstig hergestellt werden.

In diesem Sinne weist der Permanentmagnetrotor 3 zwischen den Rotornuten 13.1 ausgebildete Pole 14.1 auf, die sich parallel zur Drehachse D des Permanentmagnetrotors 3 erstrecken. Es handelt sich insoweit um gerade Pole 14.1 und nicht um schräg verlaufende Pole. Indem der Permanentmagnetrotor 3 zwischen den Rotornuten 13.1 ausgebildete Pole 14.1 aufweist, die sich parallel zur Drehachse D des Permanentmagnetrotors 3 erstrecken, kann der Permanentmagnetrotor 3 auf einfache Weise und kostengünstig hergestellt werden.

Die Rotornuten 13.1 werden somit von den konkaven Mantelwandabschnitten 13 des ersten Blechpakets 8.1 bzw. des zweiten Blechpakets 8.2 gebildet. Die konkaven Mantelwandabschnitte 13 des Permanentmagnetrotors 3 sind insoweit Einbuchtungen in der Mantelwand des jeweiligen Blechpakets 8.1, 8.2. In diesem Sinne werden die Rotorpole von konvexen Mantelwandabschnitten 14 des ersten Blechpakets 8.1 bzw. des zweiten Blechpakets 8.2 gebildet. Die konvexen Mantelwandabschnitte 14 des Permanentmagnetrotors 3 sind insoweit Erhebungen in der Mantelwand des jeweiligen Blechpakets 8.1, 8.2.

In einer speziellen Ausführungsform der Erfindung ist vorgesehen, dass der Versatzwinkel V eine Größe aufweist, die multipliziert mit dem kleinsten gemeinsamen Vielfachen der Anzahl von Polen 14.1 des Permanentmagnetrotors 3 und der Anzahl von Polschuhen 4 des Stators 2 zumindest annähernd oder genau 180 Winkelgrad ergibt.

Im Falle des dargestellten Ausführungsbeispiels weist der Stator 2 insgesamt neun Polschuhe 4 aufweist und der Permanentmagnetrotor 3 weist sechs Pole 14.1 auf, so dass der Versatzwinkel V zumindest annähernd oder genau 10 Winkelgrad beträgt.

Die Permanentmagnete 11 weisen eine zumindest im Wesentlichen quaderförmige Gestalt auf und die Taschen 10 erstrecken sich im ersten Blechpaket 8.1 und im zweiten Blechpaket 8.2 jeweils parallel zur Drehachse D des Permanentmagnetrotors 3 derart, dass die in die Taschen 10 eingesetzten Permanentmagnete 11 gleichmäßig um die Motorwelle 7 herum verteilt angeordnet sind.

Die Permanentmagnete 11 können, beispielsweise wie insbesondere in Fig. 4 und Fig. 5 gezeigt, eine großflächige, im Wesentlichen rechteckige obere Begrenzungsfläche 11.1 aufweisen, welche den einen magnetischen Pol aufweist und die in der Einbaulage des Permanentmagneten 11 radial nach außen gerichtet angeordnet ist, wie dies insbesondere in Fig. 3 zu sehen ist, und eine gleichgroße, im Wesentlichen rechteckige untere Begrenzungsfläche 11.2 aufweisen, welche den anderen magnetischen Pol aufweist und die in der Einbaulage des Permanentmagneten 11 radial nach innen gerichtet angeordnet ist, wie dies auch in Fig. 3 zu sehen ist. Die übrigen vier Seitenflächen 11.3 des quaderförmigen Permanentmagneten 11 können eine deutlich geringere Höhe H aufweisen, als die Breite B und die Länge L (Fig. 5) der oberen Begrenzungsfläche 11.1 und der unteren Begrenzungsflächen 11.2 ist. Alle Kanten des quaderförmigen Permanentmagnets 11 können mit einer Fase versehen sein bzw. abgerundet ausgebildet sein.

Wie in Fig. 2 aufgezeigt, weisen jeweils benachbarte Paare von Permanentmagneten 11 des ersten Blechpaktes 8.1 und des zweiten Blechpakets 8.2 am Umfang des Permanentmagnetrotors 3 die gleiche magnetische Polarität, nämlich N für Nord oder S für Süd auf.

### BEZUGSZEICHENLISTE

- 1: elektrischer Antriebsmotor
- 2: Stator
- 3: Permanentmagnetrotor
- 4: Polschuhe
- 5: Statornuten
- 6: Ringspalt
- 7: Motorwelle
- 8.1: erstes Blechpaket
- 8.2: zweites Blechpaket
- 9: Pole
- 10: Taschen
- 11: Permanentmagnete
- 11.1: obere Begrenzungsfläche
- 11.2: untere Begrenzungsfläche
- 11.3: Seitenflächen
- 12: Trennspalt
- 13: konkave Mantelwandabschnitte
- 13.1: Rotornuten
- 14: konvexe Mantelwandabschnitte
- 14.1: Pole

- D: Drehachse
- V: Versatzwinkel
- L: Länge
- B: Breite
- H: Höhe
- N: Nord
- S: Süd

## Patentansprüche

1. Elektrischer Antriebsmotor, aufweisend einen Stator (2) mit Polschuhen (4) und wenigstens einer elektrisch ansteuerbaren Statorwicklung, und einen im Feld der Statorwicklung unter Belassen eines Ringspaltes (6) drehantreibbar gelagerten Permanentmagnetrotor (3), der eine Motorwelle (7) und ein auf der Motorwelle (7) sitzendes erstes Blechpaket (8.1) aufweist, das eine der Anzahl von Polen (14.1) des Permanentmagnetrotors entsprechende Anzahl von Taschen (10) aufweist, in denen jeweils ein Permanentmagnet (11) eingesetzt ist, und welches erste Blechpaket (8.1) im axialen Querschnitt eine von der Kreisform abweichende Umfangskontur aufweist, die in jedem, jeweils einem Permanentmagnet (11) zugeordneten Sektor des ersten Blechpakets (8.1) eine Bogenform mit einer größeren Krümmung aufweist, als eine das erste Blechpaket (8.1) im Querschnitt einhüllende Kreisumfangskontur, und aufweisend wenigstens ein dem ersten Blechpaket (8.1) entsprechend ausgebildetes zweites Blechpaket (8.2), welches auf der Motorwelle (7) des Permanentmagnetrotors (3) bezüglich des ersten Blechpakets (8.1) um einen um die Drehachse (D) des Permanentmagnetrotors (3) gedrehten Versatzwinkel versetzt angeordnet ist, **dadurch gekennzeichnet, dass** die Permanentmagnete (11) eine zumindest im Wesentlichen quaderförmige Gestalt aufweisen und die Taschen (10) sich im ersten Blechpaket (8.1) und im zweiten Blechpaket (8.2) parallel zur Drehachse (D) des Permanentmagnetrotors (3) erstrecken, derart, dass die in die Taschen (10) eingesetzten Permanentmagnete (11) gleichmäßig um die Motorwelle (7) herum verteilt angeordnet sind,
wobei das erste Blechpaket (8.1) und das zweite Blechpaket (8.2) jeweils zwischen den Polen (9) ausgebildete Rotornuten (13.1) aufweisen, die sich parallel zur Drehachse (D) des Permanentmagnetrotors (3) erstrecken
und wobei benachbarte Permanentmagnete (11) des ersten Blechpakets (8.1) in Umfangsrichtung jeweils weiter voneinander beabstandet sind als die um den Versatzwinkel (V) zueinander versetzten Rotornuten (13.1) des ersten und zweiten Blechpakets.

2. Elektrischer Antriebsmotor nach Anspruch 1, **dadurch gekennzeichnet, dass** der Versatzwinkel (V) eine Größe aufweist, die multipliziert mit dem kleinsten gemeinsamen Vielfachen der Anzahl von Polen (9) des Permanentmagnetrotors (3) und der Anzahl von Polschuhen (4) des Stators (2) zumindest annähernd oder genau 180 Winkelgrad ergibt.

3. Elektrischer Antriebsmotor nach Anspruch 1 oder 2, **dadurch gekennzeichnet, dass** der Stator (2) neun Polschuhe (4) aufweist, der Permanentmagnetrotor (3) sechs Pole (9) aufweist und der Versatzwinkel (V) zumindest annähernd oder genau 10 Winkelgrad beträgt.

4. Elektrischer Antriebsmotor nach einem der Ansprüche 1 bis 3, **dadurch gekennzeichnet, dass** das zweite Blechpaket (8.2) unter Bildung eines radialen Trennspaltes (12) zwischen dem ersten Blechpaket (8.1) und dem zweiten Blechpaket (8.2) in axialer Richtung vom ersten Blechpaket (8.1) beabstandet auf der Motorwelle (7) befestigt ist.

5. Elektrischer Antriebsmotor nach einem der Ansprüche 1 bis 3, **dadurch gekennzeichnet, dass** das zweite Blechpaket (8.2) in axialer Richtung in unmittelbarem Kontakt zum ersten Blechpaket (8.1) auf der Motorwelle (7) befestigt ist.

6. Elektrischer Antriebsmotor nach einem der Ansprüche 1 bis 5, **dadurch gekennzeichnet, dass** jeweils benachbarte Paare von Permanentmagneten (11) des ersten Blechpaktes (8.1) und des zweiten Blechpakets (8.2) am Umfang des Permanentmagnetrotors (3) die gleiche magnetische Polarität aufweisen.

7. Elektrischer Antriebsmotor nach einem der Ansprüche 1 bis 6, **dadurch gekennzeichnet, dass** der Stator (2) zwischen den Polschuhen (4) ausgebildete Statornuten (5) aufweist, die sich parallel zur Drehachse (D) des Permanentmagnetrotors (3) erstrecken.

8. Elektrischer Antriebsmotor nach einem der Ansprüche 1 bis 7, **dadurch gekennzeichnet, dass** die Rotornuten (13.1) von konkaven Mantelwandabschnitten (13) des ersten Blechpakets (8.1) bzw. des zweiten Blechpakets (8.2) gebildet werden.

9. Haushaltsgerät, insbesondere Geschirrspülmaschine, Waschmaschine, Trockner oder Dunstabzugshaube, aufweisend einen elektrischen Antriebsmotor (1) nach einem der Ansprüche 1 bis 8.

## Claims

1. Electrical drive motor, having a stator (2) with pole shoes (4) and at least one electrically actuatable stator winding, and a permanent magnet rotor (3) mounted in the field of the stator winding leaving an annular gap (6) such that said permanent magnet rotor is capable of being driven in a rotational manner, which permanent magnet rotor has a motor shaft (7) and a first laminated core (8.1) seated on the motor shaft (7), which first laminated core (8.1) has a number of pockets (10) corresponding to the number of poles (14.1) of the permanent magnet rotor, in each of which pockets a permanent magnet (11) is inserted, and which first laminated core (8.1) has a non-circular peripheral contour in the axial cross-section, which in each sector of the first laminated core (8.1) assigned in each case to a permanent magnet (11) has an arc shape with a greater curvature than a circular peripheral contour enveloping the first laminated core (8.1) in the cross-section, and having at least one second laminated core (8.2) which is embodied to correspond to the first laminated core (8.1) and is arranged on the motor shaft (7) of the permanent magnet rotor (3) offset relative to the first laminated core (8.1) by an offset angle rotated about the rotational axis (D) of the permanent magnet rotor (3), **characterised in that** the permanent magnets (11) are at least essentially cuboid in shape and the pockets (10) extend in the first laminated core (8.1) and in the second laminated core (8.2) parallel to the rotational axis (D) of the permanent magnet rotor (3) such that the permanent magnets (11) inserted in the pockets (10) are arranged distributed evenly around the motor shaft (7),
wherein the first laminated core (8.1) and the second laminated core (8.2) have in each case rotor slots (13.1) which are embodied between the poles (9) and extend parallel to the rotational axis (D) of the permanent magnet rotor (3)
and wherein adjacent permanent magnets (11) of the first laminated core (8.1) are in each case spaced further apart from one another in the peripheral direction than the rotor slots (13.1) of the first and second laminated core which are offset relative to one another by the offset angle (V).

2. Electrical drive motor according to claim 1, **characterised in that** the offset angle (V) has a size which, when multiplied by the least common multiple of the number of poles (9) of the permanent magnet rotor (3) and the number of pole shoes (4) of the stator (2), gives an angular degree of at least approximately or exactly 180.

3. Electrical drive motor according to claim 1 or 2, **characterised in that** the stator (2) has nine pole shoes (4), the permanent magnet rotor (3) has six poles (9) and the offset angle (V) amounts to an angular degree of at least approximately or exactly 10.

4. Electrical drive motor according to one of claims 1 to 3, **characterised in that** the second laminated core (8.2) is fastened on the motor shaft (7) at a distance from the first laminated core (8.1) by a radial separating gap (12) being formed between the first laminated core (8.1) and the second laminated core (8.2) in the axial direction.

5. Electrical drive motor according to one of claims 1 to 3, **characterised in that** the second laminated core (8.2) is fastened on the motor shaft (7) in direct contact with the first laminated core (8.1) in the axial direction.

6. Electrical drive motor according to one of claims 1 to 5, **characterised in that** adjacent pairs of permanent magnets (11) of the first laminated core (8.1) and of the second laminated core (8.2) in each case have the same magnetic polarity on the periphery of the permanent magnet rotor (3).

7. Electrical drive motor according to one of claims 1 to 6, **characterised in that** the stator (2) has stator slots (5) which are embodied between the pole shoes (4) and extend parallel to the rotational axis (D) of the permanent magnet rotor (3).

8. Electrical drive motor according to one of claims 1 to 7, **characterised in that** the rotor slots (13.1) are formed by concave peripheral wall sections (13) of the first laminated core (8.1) or of the second laminated core (8.2).

9. Household appliance, in particular dishwasher, washing machine, dryer or extractor hood, having an electrical drive motor (1) according to one of claims 1 to 8.

## Revendications

1. Moteur à entraînement électrique, comprenant un stator (2) muni d'épanouissements polaires (4) et d'au moins un enroulement de stator à amorçage électrique, et un rotor à aimants permanents logé à entraînement rotatif dans le champ de l'enroulement de stator tout en laissant un entrefer (6), lequel comprend un arbre de moteur (7) et un premier empilement de tôles (8.1) reposant sur l'arbre de moteur (7), lequel présente une pluralité de poches (10) correspondant à la pluralité de pôles (14.1) du rotor à aimants permanents, dans lesquelles est inséré à chaque fois un aimant permanent (11), et lequel premier empilement de tôles (8.1) comprend, en coupe axiale, un profil périphérique dérivant de la forme circulaire, lequel présente, dans chaque secteur, du premier empilement de tôles (8.1), associé à chaque fois à un aimant permanent (11), une forme arquée ayant une courbure plus grande qu'un profil périphérique annulaire enveloppant en coupe la premier empilement de tôles (8.1), et comprenant au moins un deuxième empilement de tôles (8.2) réalisé pour correspondre au premier empilement de tôles (8.1), lequel est disposé en quinconce sur l'arbre de moteur (7) du rotor à aimants permanents (3) par rapport au premier empilement de tôles (8.1) d'un angle de décalage pivoté autour de l'axe de rotation (D) du rotor à aimants permanents (3), **caractérisé en ce que** les aimants permanents (11) présentent une configuration au moins essentiellement cuboïde et les poches (10) s'étendent dans le premier empilement de tôles (8.1) et dans le deuxième empilement de tôles (8.1) parallèlement à l'axe de rotation (D) du rotor à aimants permanents (3) de sorte que les aimants permanents (11) insérés dans les poches (10) sont distribués régulièrement autour de l'arbre de moteur (7),
le premier empilement de tôles (8.1) et le deuxième empilement de tôles (8.2) comprenant chacun des encoches de rotor (13.1) réalisées chacune entre les pôles (9), lesquelles s'étendent parallèlement à l'axe de rotation (D) du rotor à aimants permanents (3), et
des aimants permanents (11) voisins du premier empilement de tôles (8.1) étant à chaque fois encore plus écartés l'un de l'autre dans le sens périphérique que les encoches de rotor (13.1) du premier et du deuxième empilement de tôles en quinconce l'une par rapport à l'autre de l'angle de décalage (V).

2. Moteur à entraînement électrique selon la revendication 1, **caractérisé en ce que** l'angle de décalage (V) présente une ampleur qui, multipliée par le plus petit commun multiple du nombre de pôles (9) du rotor à aimants permanents (3) et du nombre d'épanouissements polaires (4) du stator (2), donne au moins à peu près ou exactement 180 degrés.

3. Moteur à entraînement électrique selon la revendication 1 ou 2, **caractérisé en ce que** le stator (2) comprend neuf épanouissements polaires (4), le rotor à aimants permanents (3), six pôles (9) et l'angle de décalage (V) vaut au moins à peu près ou exactement 10 degrés.

4. Moteur à entraînement électrique selon l'une des revendications 1 à 3, **caractérisé en ce que** le deuxième empilement de tôles (8.2) est fixé sur l'arbre de moteur (7) en formant un espace de séparation (12) radial entre le premier empilement de tôles (8.1) et le deuxième empilement de tôles (8.2) écarté dans le sens axial du premier empilement de tôles (8.1).

5. Moteur à entraînement électrique selon l'une des revendications 1 à 3, **caractérisé en ce que** le deuxième empilement de tôles (8.2) est fixé sur l'arbre de moteur (7) dans le sens axial en contact direct avec le premier empilement de tôles (8.1).

6. Moteur à entraînement électrique selon l'une des revendications 1 à 5, **caractérisé en ce que** des paires respectivement voisines d'aimants permanents (11) du premier empilement de tôles (8.1) et du deuxième empilement de tôles (8.2) présentent, sur la périphérie du rotor à aimants permanents (3), la même polarité magnétique.

7. Moteur à entraînement électrique selon l'une des revendications 1 à 6, **caractérisé en ce que** le stator (2) comprend des encoches de stator (5) réalisées entre les épanouissements polaires (4), qui s'étendent parallèlement à l'axe de rotation (D) du rotor à aimants permanents (3).

8. Moteur à entraînement électrique selon l'une des revendications 1 à 7, **caractérisé en ce que** les encoches de rotor (13.1) sont constituées de parties de paroi de manteau (13) concaves du premier empilement de tôles (8.1), respectivement du deuxième empilement de tôles (8.2).

9. Appareil électroménager, en particulier lave-vaisselle, machine à laver, séchoir ou hotte aspirante comprenant un moteur à entraînement électrique (1) selon l'une des revendications 1 à 8.
